# EUROPEAN PATENT SPECIFICATION

(11) **EP 3 858 696 B1**
(45) Date of publication and mention of the grant of the patent: **26.06.2024**
(21) Application number: 19855563.3
(22) Date of filing: 29.08.2019
(51) Int. Cl.: B60W 30/18, B60W 50/14, B60T 7/12, B60W 10/18

(54) **AUTOMATIC VEHICLE HOLD CONTROL METHOD AND DEVICE FOR VEHICLE**
VERFAHREN UND VORRICHTUNG ZUR AUTOMATISCHEN FAHRZEUGHALTESTEUERUNG
PROCÉDÉ DE COMMANDE DE DÉTENTION DE VÉHICULE AUTOMATIQUE ET DISPOSITIF POUR VÉHICULE

(30) Priority: 30.08.2018 CN 201811002373
(43) Date of publication of application: 04.08.2021
(73) Proprietor: Great Wall Motor Company Limited, Baoding, Hebei 071000 (CN)
(72) Inventor: KONG, Fanmao, Baoding, Hebei 071000 (CN); NIU, Xiaofeng, Baoding, Hebei 071000 (CN); SUN, Yu, Baoding, Hebei 071000 (CN); XU, Nan, Baoding, Hebei 071000 (CN); MENG, Xianglu, Baoding, Hebei 071000 (CN); ZHOU, Wenguo, Baoding, Hebei 071000 (CN)
(74) Representative: Ström & Gulliksson AB
(86) International application number: PCT/CN2019/103403
(87) International publication number: WO 2020/043176

(56) References cited:
- CN-A- 104 842 982
- CN-A- 105 564 400
- CN-A- 106 627 547
- CN-A- 108 238 030
- CN-A- 109 367 535
- CN-A- 109 455 170
- DE-A1-102015 220 058
- DE-A1-102016 201 664
- KR-A- 20180 056 836
- US-A1- 2018 141 556

## Description

### Field of the Invention

The invention relates to the technical field of vehicles, in particular to an auto vehicle hold control method and device.

### Background of the Invention

At present, most major automobile brands are equipped with vehicle auxiliary systems, such as adaptive cruise control (ACC), auto vehicle hold (AVH), hill descent control (HDC), driving mode and hill-start hold control (HHC), all of which are designed to assist a driver in controlling a vehicle and reduce driver fatigue, thus improving the comfort and convenience of driving.

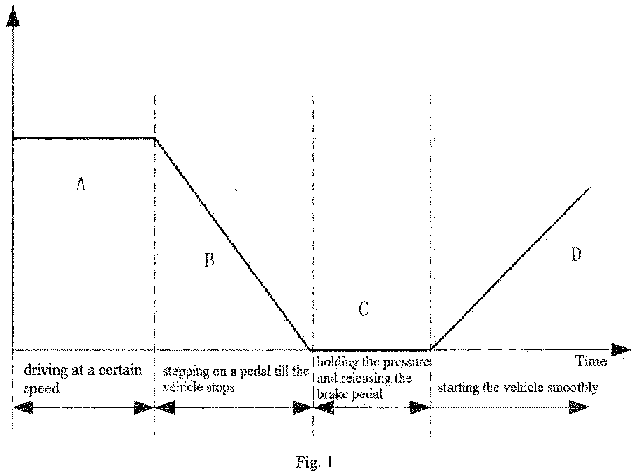

The AVH function can improve driving comfort. After a key switch is activated, the function allows a driver to stop a vehicle by stepping on a brake pedal. After releasing the brake pedal, the AVH function keeps the wheel cylinder pressure within a certain time range, so that the vehicle is held in a parking state. Beyond a certain time frame, the function is implemented by an electrical park brake (EPB) to achieve long-term parking. As shown in Fig. 1, the AVH function assists the driver in parking when the vehicle is stationary, and the driver does not need to step on the brake pedal in this case, which may specifically include the following processes:
A) The vehicle runs at a certain speed V.
B) The driver stops the vehicle by stepping on the brake pedal to apply a certain brake pressure.
C) When the driver releases the brake pedal, the AVH function keeps the wheel cylinder pressure (i.e. brake pressure) within a certain time range, so that the vehicle is held in the parking state. If the vehicle has no intention to start after a certain time frame, the parking function is implemented by the EPB to achieve long-term parking. If it is detected that the vehicle is gliding, the brake pressure is increased by actively building pressure to ensure that the vehicle is in a stationary state.
D) Within a certain time range, if AVH detects the driver's intention to start, AVH releases the wheel cylinder pressure. Specifically, when a pressure release threshold is reached, the brake pressure will be released according to a certain slope to assist the driver in smoothly starting the vehicle.

At present, the AVH function realizes parking on various road surfaces, so that drivers do not have to step on the brake pedal for a long time, greatly improving driving comfort. However, the current control logic of the AVH function is based on whether the driver is wearing a seat belt, opening or closing of a vehicle door, powering on or off of the vehicle, etc., and the AVH function is activated or exited depending on the judgment of whether the driver is in the vehicle, which has at least the following drawbacks:
(1) When the AVH function is started, if the driver releases the seat belt or opens the vehicle door, the AVH function shifts from the "Active" state to the "OFF" state; and when the seat belt is fastened, the vehicle door is closed or the vehicle is powered on again, the AVH function can be activated again only after the driver presses the key, instead of being activated automatically.
(2) When the AVH function is in the "Active" state, if the engine is turned off and then the vehicle is powered on again, the AVH function can be activated again only after the driver presses the key.
(3) When the AVH function is started and the AVH function is in the "Active" or "Standby" state, if the driver releases the seat belt, opens the vehicle door or powers off the vehicle, the AVH function is not started automatically and can be activated again only after the driver presses the key.

To sum up, as long as the AVH function loses the conditions for entering the "Active" or "Standby" state, even if the conditions are satisfied again, the AVH function can be started again only after the driver presses the key. In addition, the current AVH control logic is complicated and there is no cyclic judgment control logic, which is inconvenient for drivers.

An example of an auto vehicle hold control function is disclosed in KR 2018 0056836 A.

### Summary of the Invention

In view of this, the invention aims to propose an auto vehicle hold control method to at least partially solve the above technical problems, especially the technical problem that drivers need to frequently operate the AVH key to activate the AVH function.

In order to achieve the above purpose, the technical solution of the invention is realized as follows:
An auto vehicle hold control method includes the following steps of: detecting a parking condition signal and an auto vehicle hold function key signal associated with an auto vehicle hold function of a vehicle generated by a driver operating the vehicle in real time; when the auto vehicle hold function key signal is detected for the first time, if the corresponding detected parking condition signal meets preset parking function working conditions, controlling the auto vehicle hold function to enter an Active state or a Standby state; and when the auto vehicle hold function is in the Active state or the Standby state, performing the following auto vehicle hold control:
if the parking condition signal detected in real time no longer meets the preset parking function working conditions, controlling the auto vehicle hold function to enter a Sleep state; for the auto vehicle hold function in the Sleep state, if the parking condition signal meets the preset parking function working conditions again, controlling the auto vehicle hold function to re-enter the Active state or the Standby state; and if the auto vehicle hold function key signal is detected again, controlling the auto vehicle hold function to enter an OFF state; wherein the Active state refers to a state that the AVH function is started and parking control is executed, the Standby state refers to a state that the AVH function is started but is still waiting for a control instruction for executing parking control, the Sleep state refers to a state that the AVH function is started but to be awakened to enter the Active state or the Standby state.

Furthermore, the auto vehicle hold control method further comprising the step of: controlling an instrument panel to give a light indication when the auto vehicle hold function enters the Active state or the Standby state.

Furthermore, the auto vehicle hold control method further comprising the step of: judging whether the auto vehicle hold function can enter the Active state, the Standby state, the OFF state or the Sleep state.

Furthermore, the judging whether the auto vehicle hold function can enter the Standby state or the OFF state comprises: judging whether the auto vehicle hold function can enter the OFF state, the Standby state or the Sleep state by changing the AVH key signal and the preset parking function working conditions.

Furthermore, the judging whether the auto vehicle hold function can enter the Active state or the Standby state comprises: judging whether the auto vehicle hold function can enter the Active state or the Standby state through a brake pedal stroke signal, wherein the auto vehicle hold function should be able to enter the Active state when the brake pedal stroke signal is detected, otherwise the auto vehicle hold function should be able to enter the Standby state; and/or judging whether the auto vehicle hold function can enter the Active state or the Standby state by detecting whether an electronic braking parking signal exists after a predetermined time period, wherein if the electronic braking parking signal exists, the auto vehicle hold function can enter the Active state or the Standby state.

Compared with the prior art, the auto vehicle hold control method provided by the invention has the following advantages: a control logic aiming at the state change of the AVH function is provided, which makes up for the lack of the AVH function control logic in the automobile market; and the Sleep state is configured for the AVH function, so that the driver only needs to press the AVH key when starting the AVH function for the first time and needing to exit the AVH function, and when other AVH working conditions change, the AVH function will enter the Sleep state instead of the OFF state, so that once the AVH working conditions are met again, the AVH function can recover to the Active state or Standby state without the driver pressing the AVH key, thus solving the problem that the driver needs to operate the AVH key frequently to activate the AVH function, which reflects a more intelligent vehicle design idea and truly realizes aided driving.

Another object of the invention is to provide a machine-readable storage medium for at least partially solving the above technical problems.

In order to achieve the above purpose, the technical solution of the invention is realized as follows:
A machine-readable storage medium is provided, on which an instruction is stored, for causing a controller to execute the above-mentioned auto vehicle hold control method.

Another object of the invention is to provide an auto vehicle hold control device for at least partially solving the above technical problems.

In order to achieve the above purpose, the technical solution of the invention is realized as follows:
An auto vehicle hold control device includes: a detection module, configured to detect a parking condition signal and an auto vehicle hold function key signal associated with an auto vehicle hold function of a vehicle generated by a driver operating the vehicle in real time; an initial control module, configured to, when the auto vehicle hold function key signal is detected for the first time, if the corresponding detected parking condition signal meets preset parking function working conditions, control the auto vehicle hold function to enter an Active state or a Standby state; and a parking control module, configured to, when the auto vehicle hold function is in the Active state or the Standby state, perform the following auto vehicle hold control:
if the parking condition signal detected in real time no longer meets the preset parking function working conditions, control the auto vehicle hold function to enter a Sleep state; for the auto vehicle hold function in the Sleep state, if the parking condition signal meets the preset parking function working conditions again, control the auto vehicle hold function to re-enter the Active state or the Standby state; and if the auto vehicle hold function key signal is detected again, control the auto vehicle hold function to enter an OFF state; wherein the Active state refers to a state that the AVH function is started and parking control is executed, the Standby state refers to a state that the AVH function is started but is still waiting for a control instruction for executing parking control, the Sleep state refers to a state that the AVH function is started but to be awakened to enter the Active state or the Standby state.

Furthermore, the auto vehicle hold control device further comprising: a light control module, configured to control an instrument panel to give a light indication when the auto vehicle hold function enters the Active state or the Standby state.

Furthermore, the auto vehicle hold control device further comprising: a judgment module, configured to judge whether the auto vehicle hold function can enter the Active state, the Standby state, the OFF state or the Sleep state.

Furthermore, the judgment module comprises: a first judgment sub-module, configured to judge whether the auto vehicle hold function can enter the OFF state, the Standby state or the Sleep state by changing the auto vehicle hold (AVH) key signal and the preset parking function working conditions; a second judgment sub-module, configured to judge whether the auto vehicle hold function can enter the Active state or the Standby state through a brake pedal stroke signal, wherein the auto vehicle hold function should be able to enter the Active state when the brake pedal stroke signal is detected, otherwise the auto vehicle hold function should be able to enter the Standby state; a third judgment sub-module, configured to judge whether the auto vehicle hold function can enter the Active state or the Standby state by detecting whether an electronic braking parking signal exists after a predetermined time period, wherein if the electronic braking parking signal exists, the auto vehicle hold function can enter the Active state or the Standby state; and/or a fourth judgment sub-module, configured to judge whether the auto vehicle hold function can enter the Active state and the Standby state through a brake pedal stroke signal, a vehicle stationary signal and an electronic parking signal, wherein if the brake pedal stroke signal and the vehicle stationary signal are detected and the electronic parking signal shows that an electrical park brake of the vehicle is not working, the auto vehicle hold function should be able to enter the Active state, otherwise the auto vehicle hold function should be able to enter the Standby state.

The machine-readable storage medium and the auto vehicle hold control device have the same advantages as the above-mentioned auto vehicle hold control method compared with the prior art, which are not repeated here.

Other features and advantages of the invention will be described in detail in the following detailed description of embodiments.

### Brief Description of Drawings

The drawings forming a part of the invention are used to provide a further understanding of the invention, and the illustrative embodiments of the invention and their descriptions are used to explain the invention, and do not constitute an improper limitation of the invention. In the drawings:
Fig. 1 is a timing diagram of an AVH function operated by a vehicle;
Fig. 2 is a flowchart of an auto vehicle hold control method according to an embodiment of the invention;
Fig. 3 is a flowchart of AVH control in a preferred embodiment;
Fig. 4 is a frame diagram of cyclic judgment logic aiming at the state change of the AVH function according to an embodiment of the invention;
Fig. 5 is a schematic diagram of cyclic judgment logic aiming at the activation and failure of the AVH function according to an embodiment of the invention;
Fig. 6 is a schematic diagram of overall control logic of an AVH control method according to an embodiment of the invention; and
Fig. 7 is a structural schematic diagram of an AVH control device according to an embodiment of the invention.

### Description of reference numerals:

100. detection module; 200. initial control module; 300. parking control module; 400. light control module; 500. judgment module; 510. first judgment sub-module; 520. second judgment sub-module; 530. third judgment sub-module.

### Detailed Description of the Embodiments

It should be noted that the embodiments of the invention and the features in the embodiments may be combined with each other without conflict.

Hereinafter, the invention will be described in detail with reference to the drawings in combination with embodiments.

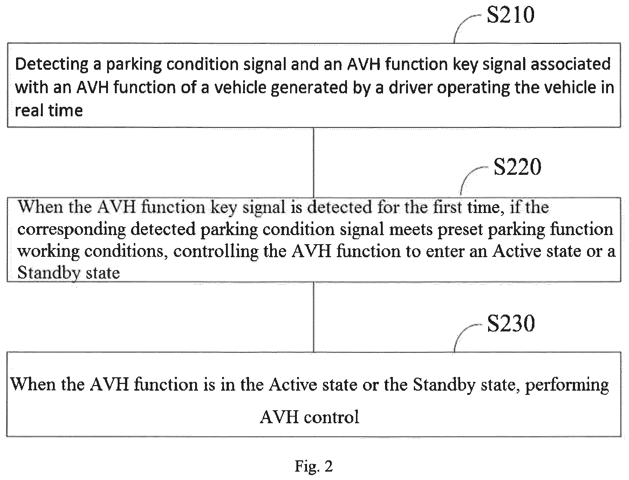

Fig. 2 is a flowchart of an auto vehicle hold control method according to an embodiment of the invention, and AVH is used to indicate auto/automatic vehicle hold below. It should be noted that in the embodiments of the invention, AVH may be used interchangeably with IVH (intelligent vehicle hold).

As shown in Fig. 2, the AVH control method may include the following steps:
S210, detecting a parking condition signal and an AVH function key signal associated with an AVH function of a vehicle generated by a driver operating the vehicle in real time.

The AVH function key signal is a key signal generated by the driver operating an AVH key on the vehicle. The AVH key may be electrically connected with an electronic stability program (ESP) of the vehicle through a hard wire. After receiving the AVH function key signal, the ESP may control a corresponding AVH controller to start the AVH function.

The parking condition signal is, for example, a signal indicating the state of a seat belt, the state of a driver side door, the power-on state of the vehicle and/or the intelligent start-stop function state of the vehicle, and the parking condition signal needs to meet the set conditions to confirm that the driver is in the vehicle, and only when the driver is in the vehicle, can the AVH function be started. It should be noted that the following description takes as an example the signal indicating the state of the seat belt, the state of the driver side door, and the power-on state of the vehicle, and the control of the AVH function when the set conditions are met or not met will also be introduced in detail, which will not be repeated here. "Power on" may be used interchangeably with "ignition".

S220, when the AVH function key signal is detected for the first time, if the corresponding detected parking condition signal meets preset parking function working conditions, controlling the AVH function to enter an Active state or a Standby state.

The Active state refers to a state that the AVH function is started and parking control is executed, and parking control here is shown in Fig. 1. The Standby state refers to a state that the AVH function is started but is still waiting for a control instruction for executing parking control (such as a brake pedal stroke signal), and once the control instruction is received, the Standby state may be switched to the Active state. The brake pedal stroke signal is also a brake pedal sensor signal, which may be used interchangeably in the embodiments of the invention, and besides the brake pedal stroke signal, a vehicle stationary signal (for example, the vehicle speed is 0 kph) may also be used as the control instruction for executing parking control.

The preset parking function working conditions include, for example, a signal indicating that the driver has correctly fastened the seat belt is detected; a signal indicating that the driver side door is closed is detected; a signal indicating that the vehicle is reignited is detected; and/or a signal indicating that the vehicle is successfully configured with the intelligent start-stop function is detected. That is, only when the driver presses the AVH key, the driver has fastened the seat belt and closed the driver side door, the vehicle is ignited and/or the intelligent start-stop function is successfully configured, can the AVH function enter the "Active" state or the "Standby" state.

The preset parking function working conditions corresponding to the "Active" state or the "Standby" state may be different. For example, the preset parking function working conditions corresponding to the "Active" state may also include that the brake pedal stroke signal is received, while the preset parking function working conditions corresponding to "Standby" may also include that there is no brake pedal stroke signal. Therefore, whether there is a brake pedal stroke signal may be detected, and if yes, the AVH function is controlled to enter the Active state, otherwise the AVH function enters the Standby state. In a preferred embodiment, the vehicle stationary signal may also be received at the same time, so that a judgment may be made according to both the brake pedal stroke signal and the vehicle stationary signal, for example, when the brake pedal stroke signal and the vehicle stationary signal (for example, the vehicle speed is 0 kph) are received, the AVH function enters the Active state, otherwise the AVH function enters the Standby state. In a more preferred embodiment, an EPB signal and/or a handbrake signal may be added for judgment making.

S230, when the AVH function is in the Active state or the Standby state, performing AVH control.

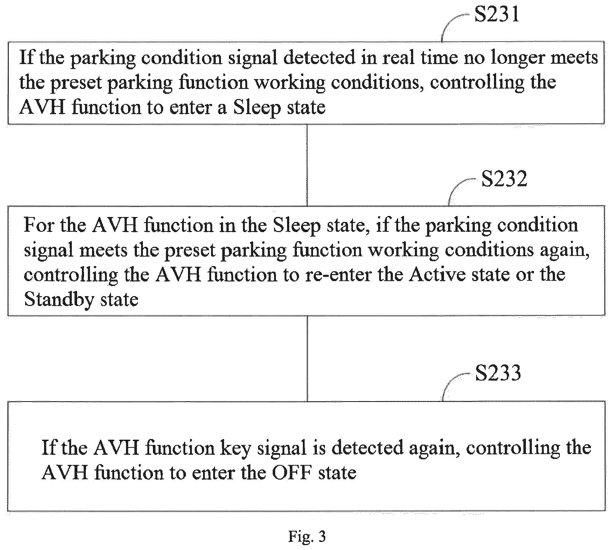

Fig. 3 is a flowchart of AVH control in a preferred embodiment. As shown in Fig. 3, performing AVH control in the step S230 may include:
S231, if the parking condition signal detected in real time no longer meets the preset parking function working conditions, controlling the auto vehicle hold function to enter a Sleep state.

Different from the Standby state and the OFF state, the Sleep state refers to a state that the AVH function is started but to be awakened to enter the Active state or the Standby state, and is a state with low power consumption. The awakening of the Sleep state does not depend on the AVH key, but depend on judging whether the current parking condition signal meets the preset parking function working conditions again.

S232: for the AVH function in the Sleep state, if the parking condition signal meets the preset parking function working conditions again, controlling the AVH function to re-enter the Active state or the Standby state.

Combined with the above steps S231 and S232, for example, when the AVH function is currently in the "Active" state or the "Standby" state, if the driver unfastens the seat belt, opens the driver side door or powers off the vehicle, the AVH function is controlled to enter the Sleep state from the "Active" state or the "Standby" state, and if the driver re-fastens the seat belt, closes the driver side door or ignites the vehicle to meet the preset parking function working conditions again, the AVH function may exit the Sleep state.

S233: if the AVH function key signal is detected again, controlling the AVH function to enter the OFF state.

The OFF state refers to a state that the AVH function is turned off. The re-detection of the AVH function key signal means that the driver presses the AVH key again, that is, the AVH function can be turned off only when the driver presses the AVH key again. In addition, for the AVH function in any one of the "Active" state, the "Standby" state and the Sleep state, the AVH function is controlled to enter the "OFF" state only when the AVH function key signal is detected again.

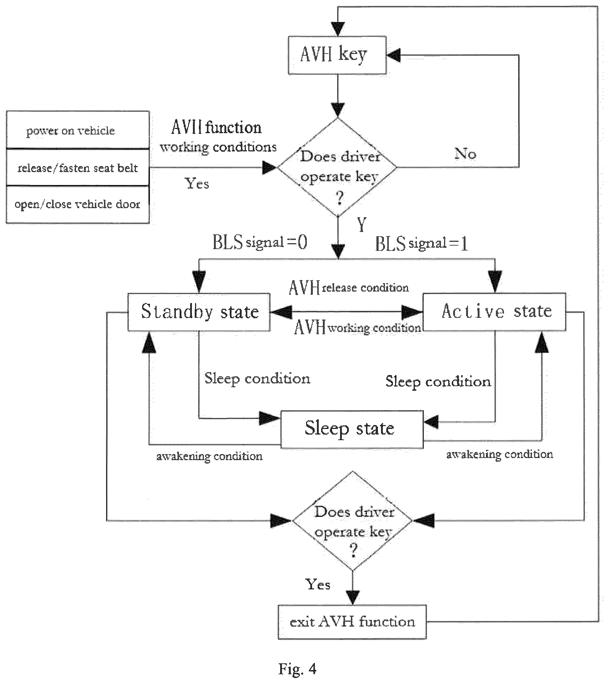

Therefore, in combination with the above steps S231-S233, the AVH control method according to the embodiment of the invention realizes the circular logic judgment on the state change of the AVH function. In the embodiment of the invention, Fig. 4 is a frame diagram of cyclic judgment logic aiming at the state change of the AVH function according to an embodiment of the invention.

As shown in Fig. 4, after the driver presses the AVH key for the first time and starts the AVH function, even if the current state of the vehicle does not meet the preset parking function working conditions, the AVH function will enter the Sleep state to be awakened instead of the "OFF" state, and once the preset parking function working conditions are met again, the AVH function will enter the "Active" state or "Standby" state from the Sleep state without the need to operate the AVH key again by the driver. Finally, when the driver manually presses the AVH key again, this function fails, and the AVH function exits the cyclic judgment control logic and enters the "OFF" state. BLS is the brake pedal sensor signal. In an example, when the BLS signal is 0, the AVH function is in the "Standby" state; and when the BLS signal is 1, the AVH function is in the "Active" state. In another example, when the BLS signal is 0 and the parking function working conditions are met, the AVH function is in the "Standby" state; and when the BLS signal is 1, the parking function working conditions are met, and the vehicle speed meets preset conditions (for example, when the vehicle speed is reduced to 0 kph, indicating that the vehicle is in a stationary state), the AVH function is shifted to the "Active" state.

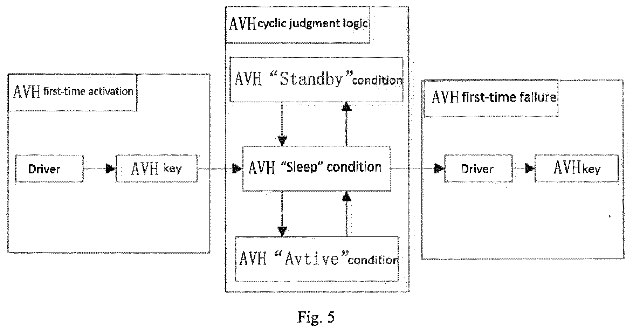

Further, Fig. 5 is a schematic diagram of cyclic judgment logic aiming at the activation and failure of the AVH function according to an embodiment of the invention. Referring to Fig. 5, only when the driver manually presses the key again, can the AVH function enter the "OFF" state. For any other operations, as long as the "Standby" state condition is met, the AVH function will enter the "Standby" state at any time; as long as the "Active" state condition is met, the AVH function will enter the "Active" state at any time; and when the "Standby" state or the "Active" state is not met, the AVH function will enter the "sleep" state directly.

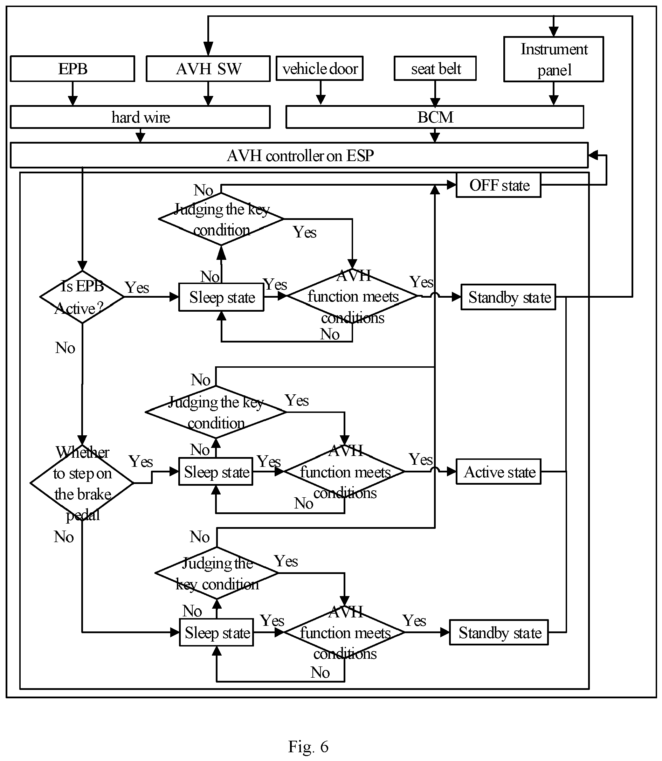

Further, combined with the cyclic judgment logic shown in Fig. 4 and Fig. 5, Fig. 6 is a schematic diagram of overall control logic of an AVH control method according to an embodiment of the invention. As shown in Fig. 6, the embodiment of the invention realizes the overall control logic of the AVH control method through an AVH controller, wherein the AVH controller is electrically connected with the EPB and the AVH key through hard wires, and is electrically connected with the driver side door, the seat belt and corresponding control units in an instrument panel through a body control module (BCM) to obtain required signals. In addition, the AVH controller receives EPB signals, AVH key signals, driver side door signals, seat belt signals and instrument panel signals, and sends a control instruction to the AVH key and the instrument panel according to the corresponding state of the AVH function in the overall control logic. The AVH controller may be an independent controller or a control module configured in an electronic control unit (ECU) or ESP of the vehicle.

The AVH controller sends the control instruction to the instrument panel to make the instrument panel give a light indication. Therefore, in a preferred embodiment, the AVH control method may further include the step of: when the AVH function enters the Active state or the Standby state, controlling the instrument panel to give a light indication. For example, when the AVH function enters the Active state or the Standby state, a specified LED lamp in the integrated instrument panel (IP) is turned on. It should be noted that in the whole cyclic judgment control logic process, the instrument panel can be matched with the AVH key and various states of the AVH function for light display to assist the driver in controlling the vehicle.

In addition, through the overall control logic in Fig. 6, it can be seen that the AVH function is configured with the "Active" state, the "Standby" state, the "OFF" state and the "Sleep" state, wherein the "Sleep" state is an intermediate state, while the "Active" state, the "Standby" state and the "OFF" state are states that need to be finally reached in the control logic. Accordingly, in a preferred embodiment, the AVH control method further includes: judging whether the AVH function can enter the "Active" state, the "Standby" state, the "OFF" state or the "Sleep" state. The purpose of this judgment is to ensure that the AVH function is normal and can enter the "Active" state, the "Standby" state, the "OFF" state or the "Sleep" state.

Judging whether the AVH function can enter the "Standby" state or the "OFF" state may include: judging whether the AVH function can enter the "Standby" state, the "OFF" state or the "Sleep" state by changing the AVH key signal and the preset parking function working conditions.

With reference to Fig. 6, for example, whether the AVH function can enter the "OFF" state, the "Standby" state or the "Sleep" state can be judged according to the AVH key signal and vehicle states (the vehicle states include whether the driver is wearing a seat belt, whether the driver side door is closed, whether the vehicle is ignited and/or EPB state). For example, when the AVH key signal is received for the first time, the driver fastens the seat belt, the driver side door is closed, and the vehicle is ignited (i.e., the preset AVH function working conditions are met) to observe whether a signal indicator corresponding to the "Standby" state lights up, so as to judge whether the AVH function can enter the "Standby" state. For another example, when the signal indicator shows that the AVH function is in the "Standby" or "Active" state, the driver unfastens the seat belt or powers off the vehicle to observe whether a signal indicator corresponding to the "Sleep" state lights up, so as to judge whether the AVH function can enter the "Sleep" state. For another example, when the AVH function is in the "Active" or "Standby" state, the driver presses the AVH key again to observe whether a signal indicator corresponding to the "OFF" state lights up, so as to judge whether the AVH function can enter the "OFF" state.

Whether the AVH function can enter the "Active" state or the "Standby" state may be judged in any one or more of the following ways:
1) Whether the AVH function can enter the "Active" state or the "Standby" state is judged by generating the brake pedal stroke signal. If the brake pedal stroke signal is detected, the AVH function should be able to enter the "Active" state; otherwise, the AVH function should be able to enter the "Standby" state.
   For example, the detection of the brake pedal stroke signal is one of the conditions for the "Active" state, when the AVH key signal is received for the first time and the preset AVH function working conditions are met, the driver steps on the brake pedal to generate the brake pedal stroke signal, and whether the signal indicator corresponding to the "Active" state lights up is observed to judge whether the AVH function can enter the "Active" state; and under the condition that there is no brake pedal stroke signal, whether the signal indicator corresponding to the "Standby" state lights up is observed to judge whether the AVH function can enter the "Standby" state.
2) Whether the AVH function can enter the "Active" state or the "Standby" state is judged by detecting whether there is an EPB signal after a predetermined time period. If there is the EPB signal, the AVH function can enter the "Active" state or "Standby" state, including shifting from the "Active" state to the "Standby" state or maintaining the "Standby" state all the time.
   According to the relevant description of Fig. 1, after the AVH function keeps pressure for a certain period of time, if the vehicle has no intention to start, the parking function is implemented by the EPB to achieve long-term parking. In this way, it can be seen that the "Active" state or the "Standby" state of the AVH function is inherited by the EPB, so whether the AVH function can enter the "Active" state or the "Standby" state can be judged by judging whether the parking function can be taken over by the EPB. In addition, for vehicles with a handbrake function (including electronic handbrake and mechanical handbrake), similar to the EPB, corresponding logic can be configured to judge whether the AVH function can enter the "Active" state or the "Standby" state based on whether the vehicle can successfully realize hand braking.
3) Whether the AVH function can enter the "Active" state and the "Standby" state is judged by generating the brake pedal stroke signal, the vehicle stationary signal (for example, a vehicle speed signal showing a vehicle speed of 0 kph) and the EPB signal. If the brake pedal stroke signal and the vehicle stationary signal are detected and the EPB signal shows that the EPB is not working, the AVH function should be able to enter the "Active" state, otherwise the AVH function should be able to enter the "Standby" state.

For example, the detection of the brake pedal stroke signal, the vehicle stationary signal and the EPB signal is the conditions for the "Active" state, and when the corresponding signals meet the preset conditions, whether the signal indicator corresponding to the "Active" state lights up is observed to judge whether the AVH function can enter the "Active" state; and under the condition that the conditions for the "Active" state are not met, whether the signal indicator corresponding to the "Standby" state lights up is observed to judge whether the AVH function can enter the "Standby" state.

The third judgment method is an improvement on the first judgment method, and is more suitable for judging the entry state of the AVH function in various scenarios.

To sum up, according to the AVH control method in the embodiment of the invention, the control logic aiming at the state change of the AVH function is provided, which makes up for the lack of the AVH function control logic in the automobile market; and the "Sleep" state is configured for the AVH function, so that the driver only needs to press the AVH key when starting the AVH function for the first time and needing to exit the AVH function, and when other AVH working conditions change, the AVH function will enter the "Sleep" state instead of the "OFF" state, so that once the AVH working conditions are met again, the AVH function can recover to the Active state or Standby state without the driver pressing the AVH key, thus solving the problem that the driver needs to operate the AVH key frequently to activate the AVH function, which reflects a more intelligent vehicle design idea and truly realizes aided driving. More specifically, the AVH control method has the following advantages:
1) The AVH control method according to the embodiment of the invention can realize intelligent AVH function cyclic judgment logic at the software level, for example, the logic is written into an ECU in the form of program code, and the cyclic judgment conditions are monitored through a logic architecture, thus solving the problem that the driver needs to press the AVH key frequently in daily driving in a simple and flexible way.
2) The AVH control method according to the embodiment of the invention can be realized by an independent AVH controller at the software level, and there are no other hardware switches or keys in a cab or on an operation panel, so that there are no additional costs and the development expenses are saved.
3) The AVH control method according to the embodiment of the invention not only saves vehicle development expenses for original equipment manufacturers, but also promotes the independent design concept of the vehicle, thus improving the competitiveness of vehicles compared with those produced by other original equipment manufacturers, and bringing a greater benefit to enterprises.
4) The AVH control method according to the embodiment of the invention makes the future functional design of vehicles more intelligent, and puts forward functional technical requirements for designers, thus having a certain spurring effect.
5) The AVH control method according to the embodiment of the invention reflects the rationality of vehicle function development and intelligent design level in field performance, and reduces customers' complaining about unreasonable development.
6) The AVH control method according to the embodiment of the invention can fully display the performance level of automobiles.

Another embodiment of the invention also provides a machine-readable storage medium, on which an instruction is stored, which is used to make a controller execute the AVH control method described in any of the above embodiments. The controller is, for example, the AVH controller mentioned above.

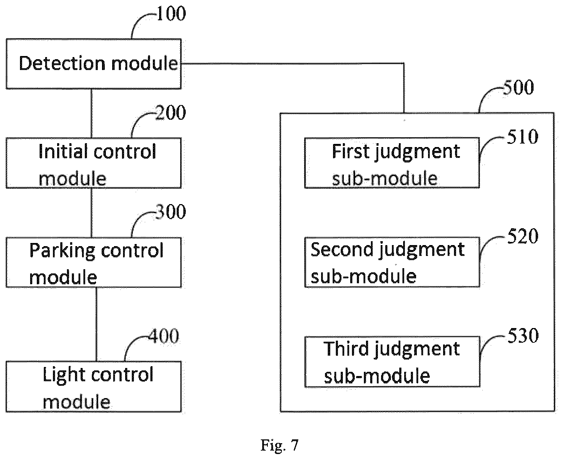

An embodiment of the invention also provides an AVH control device which is based on the same inventive idea as the AVH control method of the above embodiment. Fig. 7 is a structural schematic diagram of an AVH control device according to an embodiment of the invention. As shown in Fig. 7, the AVH control device may include: a detection module 100 configured to detect a parking condition signal and an auto vehicle hold function key signal associated with an auto vehicle hold function of a vehicle generated by a driver operating the vehicle in real time; an initial control module 200 configured to, when the auto vehicle hold function key signal is detected for the first time, if the corresponding detected parking condition signal meets preset parking function working conditions, control the auto vehicle hold function to enter an "Active" state or a "Standby" state; and a parking control module 300 configured to, when the auto vehicle hold function is in the "Active" state or the "Standby" state, perform AVH control.

The AVH control performed by the parking control module 300 may include: if the parking condition signal detected in real time no longer meets the preset parking function working conditions, controlling the auto vehicle hold function to enter a "Sleep" state; for the AVH function in the "Sleep" state, if the parking condition signal meets the preset parking function working conditions again, controlling the auto vehicle hold function to re-enter the "Active" state or the "Standby" state; and if the auto vehicle hold function key signal is detected again, controlling the auto vehicle hold function to enter an "OFF" state.

The AVH control device according to the embodiment of the invention is, for example, the AVH controller mentioned above.

In a preferred embodiment, the AVH control device further includes a light control module 400, configured to control an instrument panel to give a light indication when the AVH function enters the "Active" state or the "Standby" state.

In a preferred embodiment, the AVH control device further includes a judgment module 500, configured to judge whether the AVH function can enter the "Active" state, the "Standby" state, the "OFF" state or the "Sleep" state.

Referring to Fig. 7 again, in a more preferred embodiment, the judgment module 500 may include a first judgment sub-module 510, configured to judge whether the AVH function can enter the "OFF" state, the "Standby" state or the "Sleep" state by changing the AVH key signal and the preset parking function working conditions; a second judgment sub-module 520, configured to judge whether the AVH function can enter the "Active" state or the "Standby" state through the brake pedal stroke signal, wherein the AVH function should be able to enter the "Active" state when the brake pedal stroke signal is detected, otherwise the AVH function should be able to enter the "Standby" state; and/or a third judgment sub-module 530, configured to judge whether the AVH function can enter the "Active" state or the "Standby" state by detecting whether an electronic braking parking signal exists after a predetermined time period, wherein if the electronic braking parking signal exists, the AVH function can enter the "Active" state or the "Standby" state, including shifting from the "Active" state to the "Standby" state or maintaining the "Standby" state all the time.

In a preferred embodiment, the judgment module 500 may further include a fourth judgment sub-module (not shown in Fig. 7), configured to judge whether the AVH function can enter the "Active" state and the "Standby" state by generating the brake pedal stroke signal, the vehicle stationary signal (for example, the vehicle speed signal showing a vehicle speed of 0 kph) and the EPB signal. If the brake pedal stroke signal and the vehicle stationary signal are detected and the EPB signal shows that the EPB is not working, the AVH function should be able to enter the "Active" state, otherwise the AVH function should be able to enter the "Standby" state.

The specific embodiment details and advantages of the AVH control device according to the embodiment of the invention are the same as or similar to the embodiments related to the AVH control method described above, and will not be repeated here.

The above are only preferred embodiments of the invention, which are not intended to limit the invention. Modifications are possible within the scope of the invention as defined by the appended claims.

Those skilled in the art can understand that all or part of the steps in the method for implementing the above embodiments can be completed by instructing related hardware through a program, which is stored in a storage medium and includes several instructions to make a single chip microcomputer, chip or processor execute all or part of the steps of the method described in each embodiment of this description. The aforementioned storage medium includes: an USB flash disk, a removable hard disk, a read-only memory (ROM), a random access memory (RAM), a magnetic disk or an optical disk and other media which can store program codes.

## Claims

1. An auto vehicle hold (AVH) control method, wherein the method comprising the following steps:
detecting a parking condition signal and an AVH function key signal associated with an AVH function of a vehicle generated by a driver operating the vehicle in real time (S210);
when the AVH function key signal is detected for the first time, if the corresponding detected parking condition signal meets preset parking function working conditions, controlling the AVH function to enter an Active state or a Standby state; and
when the AVH function is in the Active state or the Standby state (S220); **characterized by** performing the following AVH control (S230);
if the parking condition signal detected in real time no longer meets the preset parking function working conditions, controlling the AVH function to enter a Sleep state (S231);
for the AVH function in the Sleep state, if the parking condition signal meets the preset parking function working conditions again, controlling the AVH function to re-enter the Active state or the Standby state (S232); and
if the AVH function key signal is detected again, controlling the AVH function to enter an OFF state (S233);
wherein, the Active state refers to a state that the AVH function is started and parking control is executed, the Standby state refers to a state that the AVH function is started but is still waiting for a control instruction for executing parking control, the Sleep state refers to a state that the AVH function is started but to be awakened to enter the Active state or the Standby state.

2. The AVH control method according to claim 1, wherein the method further comprising the step of:
controlling an instrument panel to give a light indication when the AVH function enters the Active state or the Standby state.

3. The AVH control method according to claim 1, wherein the method further comprising the step of:
judging whether the AVH function can enter the Active state, the Standby state, the OFF state or the Sleep state.

4. The AVH control method according to claim 3, wherein judging whether the AVH function can enter the Standby state or the OFF state comprises:
judging whether the AVH function can enter the OFF state, the Standby state or the Sleep state by changing the AVH key signal and the preset parking function working conditions.

5. The AVH control method according to claim 3, wherein judging whether the AVH function can enter the Active state or the Standby state comprises:
judging whether the AVH function can enter the Active state or the Standby state through a brake pedal stroke signal, wherein the AVH function should be able to enter the Active state when the brake pedal stroke signal is detected, otherwise the AVH function should be able to enter the Standby state; and/or
judging whether the AVH function can enter the Active state or the Standby state by detecting whether an electronic braking parking signal exists after a predetermined time period, wherein if the electronic braking parking signal exists, the AVH function can enter the Active state or the Standby state.

6. The AVH control method according to claim 3, wherein judging whether the AVH function can enter the Active state or the Standby state comprises:
judging whether the AVH function can enter the Active state and the Standby state through a brake pedal stroke signal, a vehicle stationary signal and an electronic parking signal, wherein if the brake pedal stroke signal and the vehicle stationary signal are detected and the electronic parking signal shows that an electrical park brake of the vehicle is not working, the AVH function should be able to enter the Active state, otherwise the AVH function should be able to enter the Standby state.

7. A machine-readable storage medium, on which an instruction is stored, for causing a controller to execute the AVH control method according to any one of claims 1-6.

8. An auto vehicle hold (AVH) control device, wherein the device comprising:
a detection module (100), configured to detect a parking condition signal and an AVH function key signal associated with an AVH function of a vehicle generated by a driver operating the vehicle in real time;
an initial control module (200), configured to, when the AVH function key signal is detected for the first time, if the corresponding detected parking condition signal meets preset parking function working conditions, control the AVH function to enter an Active state or a Standby state; and
a parking control module (300), **characterized in that** it is configured to, when the AVH function is in the Active state or the Standby state, perform the following AVH control:
if the parking condition signal detected in real time no longer meets the preset parking function working conditions, control the AVH function to enter a Sleep state;
for the AVH function in the Sleep state, if the parking condition signal meets the preset parking function working conditions again, control the AVH function to re-enter the Active state or the Standby state; and
if the AVH function key signal is detected again, control the AVH function to enter an OFF state;
wherein, the Active state refers to a state that the AVH function is started and parking control is executed, the Standby state refers to a state that the AVH function is started but is still waiting for a control instruction for executing parking control, the Sleep state refers to a state that the AVH function is started but to be awakened to enter the Active state or the Standby state.

9. The AVH control device according to claim 8, wherein the device further comprising:
a light control module (400), configured to control an instrument panel to give a light indication when the AVH function enters the Active state or the Standby state.

10. The AVH control device according to claim 8, wherein the device further comprising:
a judgment module (500), configured to judge whether the AVH function can enter the Active state, the Standby state, the OFF state or the Sleep state.

11. The AVH control device according to claim 10, wherein the judgment module (500) comprises:
a first judgment sub-module (510), configured to judge whether the AVH function can enter the OFF state, the Standby state or the Sleep state by changing the AVH key signal and the preset parking function working conditions;
a second judgment sub-module (520), configured to judge whether the AVH function can enter the Active state or the Standby state through a brake pedal stroke signal, wherein the AVH function should be able to enter the Active state when the brake pedal stroke signal is detected, otherwise the AVH function should be able to enter the Standby state;
a third judgment sub-module (530), configured to judge whether the AVH function can enter the Active state or the Standby state by detecting whether an electronic braking parking signal exists after a predetermined time period, wherein if the electronic braking parking signal exists, the AVH function can enter the Active state or the Standby state; and/or
a fourth judgment sub-module, configured to judge whether the AVH function can enter the Active state and the Standby state through a brake pedal stroke signal, a vehicle stationary signal and an electronic parking signal, wherein if the brake pedal stroke signal and the vehicle stationary signal are detected and the electronic parking signal shows that an electrical park brake of the vehicle is not working, the AVH function should be able to enter the Active state, otherwise the AVH function should be able to enter the Standby state.

## Patentansprüche

1. Verfahren zur automatischen Fahrzeughaltesteuerung (AVH), wobei das Verfahren die folgenden Schritte umfasst:
Detektieren eines Parkbedingungssignals und eines AVH-Funktionstastensignals, das einer AVH-Funktion eines Fahrzeugs zugeordnet ist, das von einem Fahrer erzeugt wird, der das Fahrzeug bedient, in Echtzeit (S210);
wenn ein AVH-Funktionstastensignal zum ersten Mal detektiert wird, falls das entsprechende detektierte Parkbedingungssignal die voreingestellten Parkfunktionsbetriebsbedingungen erfüllt, Steuern der AVH-Funktion dahingehend, in einen Aktiv-Zustand oder einen Standby-Zustand einzutreten; und
wenn die AVH-Funktion in dem Aktiv-Zustand oder dem Standby-Zustand ist (S220);
**gekennzeichnet durch** das Durchführen der folgenden AVH-Steuerung (S230);
falls das in Echtzeit detektierte Parkbedingungssignal die voreingestellten Parkfunktionsbetriebsbedingungen nicht mehr erfüllt, Steuern der AVH-Funktion dahingehend, in einen Sleep-Zustand (S231) einzutreten;
für die AVH-Funktion in dem Sleep-Zustand, falls das Parkbedingungssignal die voreingestellten Parkfunktionsbetriebsbedingungen wieder erfüllt, Steuern der AVH-Funktion dahingehend, erneut in den Aktiv-Zustand oder den Standby-Zustand einzutreten (S232); und
falls das AVH-Funktionstastensignal wieder detektiert wird, Steuern der AVH-Funktion dahingehend, in einen AUS-Zustand einzutreten (S233);
wobei sich der Aktiv-Zustand auf einen Zustand bezieht, in dem die AVH-Funktion gestartet wird und die Parksteuerung ausgeführt wird, sich der Standby-Zustand auf einen Zustand bezieht, in dem die AVH-Funktion gestartet wird, jedoch noch einen Steuerbefehl zum Ausführen der Parksteuerung abwartet, der Sleep-Zustand sich auf einen Zustand bezieht, in dem die AVH-Funktion gestartet wird, um jedoch wach zu sein, um in den Aktiv-Zustand oder den Standby-Zustand einzutreten.

2. Verfahren zur automatischen Fahrzeughaltesteuerung (AVH) nach Anspruch 1, wobei das Verfahren ferner den folgenden Schritt umfasst:
Steuern eines Armaturenbretts, um eine Lichtanzeige zu vermitteln, wenn die AVH-Funktion in den Aktiv-Zustand oder den Standby-Zustand eintritt.

3. Verfahren zur automatischen Fahrzeughaltesteuerung (AVH) nach Anspruch 1, ferner umfassend den Schritt:
Beurteilen, ob die AVH-Funktion in den Aktiv-Zustand, den Standby-Zustand, den AUS-Zustand oder den Sleep-Zustand eintreten kann.

4. Verfahren zur automatischen Fahrzeughaltesteuerung (AVH) nach Anspruch 3, wobei das Beurteilen, ob die AVH-Funktion in den Standby-Zustand oder in den AUS-Zustand eintreten kann, umfasst:
Beurteilen, ob die AVH-Funktion in den AUS-Zustand, den Standby-Zustand oder den Sleep-Zustand eintreten kann, indem das AVH-Schlüsselsignal und die voreingestellten Parkfunktionsbetriebsbedingungen geändert werden.

5. Verfahren zur automatischen Fahrzeughaltesteuerung (AVH) nach Anspruch 3, wobei das Beurteilen, ob die AVH-Funktion in den Aktiv-Zustand oder in den Standby-Zustand eintreten kann, umfasst:
Beurteilen, ob die AVH-Funktion in den Aktiv-Zustand oder den Standby-Zustand eintreten kann, durch ein Bremspedalhubsignal, wobei die AVH-Funktion in der Lage sein sollte, in den Aktiv-Zustand einzutreten, wenn das Bremspedalhubsignal detektiert wird, andernfalls die AVH-Funktion in der Lage sein sollte, in den Standby-Zustand einzutreten; und/oder
Beurteilen, ob die AVH-Funktion in den Aktiv-Zustand oder den Standby-Zustand eintreten kann, durch Detektieren, ob nach einer vorgegebenen Zeitspanne ein elektronisches Bremsparksignal vorhanden ist, wobei, falls das elektronische Bremsparksignal vorhanden ist, die AVH-Funktion in den Aktiv-Zustand oder den Standby-Zustand eintreten kann.

6. Verfahren zur automatischen Fahrzeughaltesteuerung (AVH) nach Anspruch 3, wobei das Beurteilen, ob die AVH-Funktion in den Aktiv-Zustand oder in den Standby-Zustand eintreten kann, umfasst:
Beurteilen, durch ein Bremspedalhubsignal, ein Fahrzeugstillstandsignal und ein elektronisches Parksignal, ob die AVH-Funktion in den Aktiv-Zustand und den Standby-Zustand eintreten kann, wobei, wenn das Bremspedalhubsignal und das Fahrzeugstillstandsignal detektiert werden und das elektronische Parksignal zeigt, dass eine elektrische Parkbremse des Fahrzeugs nicht funktioniert, die AVH-Funktion in der Lage sein sollte, in den Aktiv-Zustand einzutreten, andernfalls die AHV-Funktion in der Lage sein sollte, in den Standby-Zustand einzutreten.

7. Maschinenlesbares Speichermedium, auf dem ein Befehl gespeichert ist, um einen Controller zu veranlassen, das Verfahren zur automatischen Fahrzeughaltesteuerung (AVH) nach einem der Ansprüche 1 bis 6 auszuführen.

8. Vorrichtung zur automatischen Fahrzeughaltesteuerung (AVH), wobei die Vorrichtung aufweist:
ein Detektionsmodul (100), das konfiguriert ist, um ein Parkzustandssignal und ein AVH-Funktionstastensignal, das einer AVH-Funktion eines Fahrzeugs zugeordnet ist, , das von einem Fahrer erzeugt wird, der das Fahrzeug bedient, in Echtzeit zu detektieren;
ein Initial-Steuerungsmodul (200), das konfiguriert ist, um, wenn das AVH-Funktionstastensignal zum ersten Mal detektiert wird, falls das entsprechende detektierte Parkbedingungssignal voreingestellte Parkfunktionsbetriebsbedingungen erfüllt, die AVH-Funktion dahingehend zu steuern, in einen Aktiv-Zustand oder einen Standby-Zustand einzutreten; und
ein Parksteuermodul (300),
**dadurch gekennzeichnet, dass** es konfiguriert ist, um dann, wenn die AVH-Funktion in dem Aktiv-Zustand oder dem Standby-Zustand ist, die folgende AVH-Steuerung durchzuführen:
falls das in Echtzeit detektierte Parkbedingungssignal die voreingestellten Parkfunktionsbetriebsbedingungen nicht mehr erfüllt, Steuern der AVH-Funktion dahingehend, in einen Sleep-Zustand einzutreten;
für die AVH-Funktion in dem Sleep-Zustand, falls das Parkbedingungssignal die voreingestellten Parkfunktionsbetriebsbedingungen wieder erfüllt, Steuern der AVH-Funktion dahingehend, erneut in den Aktiv-Zustand oder den Standby-Zustand einzutreten; und
falls das AVH-Funktionstastensignal wieder detektiert wird, Steuern der AVH-Funktion dahingehend, in einen AUS-Zustand einzutreten;
wobei sich der Aktiv-Zustand auf einen Zustand bezieht, in dem die AVH-Funktion gestartet wird und die Parksteuerung ausgeführt wird, sich der Standby-Zustand auf einen Zustand bezieht, in dem die AVH-Funktion gestartet wird, jedoch noch einen Steuerbefehl zum Ausführen der Parksteuerung wartet, sich der Sleep-Zustand auf einen Zustand bezieht, in dem die AVH-Funktion gestartet wurde, um jedoch wach zu sein, um in den Aktiv-Zustand oder den Standby-Zustand einzutreten.

9. Vorrichtung zur automatischen Fahrzeughaltesteuerung (AVH) nach Anspruch 8, wobei die Vorrichtung ferner aufweist:
ein Lichtsteuerungsmodul (400), das konfiguriert ist, ein Armaturenbrett zu steuern, um eine Lichtanzeige zu vermitteln, wenn die AVH-Funktion in den Aktiv-Zustand oder den Standby-Zustand eintritt.

10. Vorrichtung zur automatischen Fahrzeughaltesteuerung (AVH) nach Anspruch 8, wobei die Vorrichtung ferner aufweist:
ein Beurteilungsmodul, das konfiguriert ist, um zu beurteilen, ob die AVH-Funktion in den Aktiv-Zustand, den Standby-Zustand, den AUS-Zustand oder den Sleep-Zustand eintreten kann.

11. Vorrichtung zur automatischen Fahrzeughaltesteuerung (AVH) nach Anspruch 10, wobei das Beurteilungsmodul (500) aufweist:
ein erstes Beurteilungs-Submodul (510), das konfiguriert ist, um zu beurteilen, ob die AVH-Funktion in den AUS-Zustand, den Standby-Zustand oder den Sleep-Zustand eintreten kann, indem es das AVH-Schlüsseltastensignal und die voreingestellten Parkfunktionsbetriebsbedingungen verändert;
ein zweites Beurteilungs-Submodul (520), das konfiguriert ist, um durch ein Bremspedalhubsignal zu beurteilen, ob die AVH-Funktion in den Aktiv-Zustand oder den Standby-Zustand eintreten kann, wobei die AVH-Funktion in der Lage sein sollte, in den Aktiv-Zustand einzutreten, wenn das Bremspedalhubsignal detektiert wird, und andernfalls die AVH-Funktion in der Lage sein sollte, in den Standby-Zustand einzutreten;
ein drittes Beurteilungs-Submodul (530), das konfiguriert ist, um zu beurteilen, ob die AVH-Funktion in den Aktiv-Zustand oder den Standby-Zustand eintreten kann, indem es detektiert, ob nach einer vorbestimmten Zeitspanne ein elektronisches Bremspark-Signal vorhanden ist, wobei dann, wenn das elektronische Bremspark-Signal vorhanden ist, die AVH-Funktion in den Aktiv-Zustand oder den Standby-Zustand eintreten kann; und/oder
ein viertes Beurteilungs-Submodul, das konfiguriert ist, um durch ein Bremspedalhubsignal, ein Fahrzeugstillstandssignal und ein elektronisches Parksignal zu beurteilen, ob die AVH-Funktion in den Aktiv-Zustand und den Standby-Zustand eintreten kann, wobei, falls das Bremspedal-Hubsignal und das Fahrzeugstillstandssignal detektiert werden und das elektronische Parksignal zeigt, dass eine elektrische Parkbremse des Fahrzeugs nicht funktioniert, die AVH-Funktion in der Lage sein sollte, in den Aktiv-Zustand einzutreten, andernfalls die AVH-Funktion in der Lage sein sollte, in den Standby-Zustand einzutreten.

## Revendications

1. Procédé de commande de maintien automatique de véhicule (AVH), dans lequel le procédé comprend les étapes suivantes :
la détection d'un signal de condition de stationnement et d'un signal clé de fonction AVH associé à une fonction AVH d'un véhicule généré par un conducteur faisant fonctionner le véhicule en temps réel (S210) ;
lorsque le signal clé de fonction AVH est détecté pour la première fois, si le signal de condition de stationnement détecté correspondant satisfait des conditions de travail de fonction de stationnement préréglées, la commande de la fonction AVH pour qu'elle entre dans un état actif ou un état de veille ; et
lorsque la fonction AVH est dans l'état actif ou l'état de veille (S220) ;
**caractérisé par** la réalisation de la commande d'AVH (S230) suivante ;
si le signal de condition de stationnement détecté en temps réel ne satisfait plus les conditions de travail de fonction de stationnement préréglées, la commande de la fonction AVH pour entrer dans un état de sommeil (S231) ;
pour la fonction AVH dans l'état de sommeil, si le signal de condition de stationnement satisfait les conditions de travail de fonction de stationnement préréglées à nouveau, la commande de la fonction AVH pour qu'elle rentre à nouveau dans l'état actif ou l'état de veille (S232) ; et
si le signal clé de fonction AVH est détecté à nouveau, la commande de la fonction AVH pour qu'elle entre dans un état d'arrêt (S233) ;
dans lequel, l'état actif s'applique à un état dans lequel la fonction AVH est démarrée et la commande de stationnement est exécutée, l'état de veille s'applique à un état dans lequel la fonction AVH est démarrée mais est toujours en attente d'une instruction de commande pour exécuter la commande de stationnement, l'état de sommeil s'applique à un état dans lequel la fonction AVH est démarrée mais doit être réveillée pour entrer dans l'état actif ou l'état de veille.

2. Procédé de commande d'AVH selon la revendication 1, dans lequel le procédé comprend en outre l'étape suivante :
la commande d'un tableau de bord pour donner une indication lumineuse lorsque la fonction AVH entre dans l'état actif ou l'état de veille.

3. Procédé de commande d'AVH selon la revendication 1, dans lequel le procédé comprend en outre l'étape suivante :
le fait de juger si la fonction AVH peut entrer dans l'état actif, l'état de veille, l'état d'arrêt ou l'état de sommeil.

4. Procédé de commande d'AVH selon la revendication 3, dans lequel le fait de juger si la fonction AVH peut entrer dans l'état de veille ou l'état d'arrêt comprend :
le fait de juger si la fonction AVH peut entrer dans l'état d'arrêt, l'état de veille ou l'état de sommeil par modification du signal clé d'AVH et des conditions de travail de fonction de stationnement préréglées.

5. Procédé de commande d'AVH selon la revendication 3, dans lequel le fait de juger si la fonction AVH peut entrer dans l'état actif ou l'état de veille comprend :
le fait de juger si la fonction AVH peut entrer dans l'état actif ou l'état de veille par l'intermédiaire d'un signal de course de pédale de frein, dans lequel la fonction AVH devrait pouvoir entrer dans l'état actif lorsque le signal de course de pédale de frein est détecté, sinon la fonction AVH devrait pouvoir entrer dans l'état de veille ; et/ou
le fait de juger si la fonction AVH peut entrer dans l'état actif ou l'état de veille par le fait de détecter si un signal de stationnement de freinage électronique existe après un laps de temps prédéterminé, dans lequel si le signal de stationnement de freinage électronique existe, la fonction AVH peut entrer dans l'état actif ou l'état de veille.

6. Procédé de commande d'AVH selon la revendication 3, dans lequel le fait de juger si la fonction AVH peut entrer dans l'état actif ou l'état de veille comprend :
le fait de juger si la fonction AVH peut entrer dans l'état actif et l'état de veille par l'intermédiaire d'un signal de course de pédale de frein, un signal d'arrêt de véhicule et un signal de stationnement électronique, dans lequel si le signal de course de pédale de frein et le signal d'arrêt de véhicule sont détectés et le signal de stationnement électronique montre qu'un frein de stationnement électrique du véhicule ne fonctionne pas, la fonction AVH devrait pouvoir entrer dans l'état actif, sinon la fonction AVH devrait pouvoir entrer dans l'état de veille.

7. Support de stockage lisible par machine, sur lequel une instruction est mise en mémoire, pour amener un dispositif de commande à exécuter le procédé de commande d'AVH selon l'une quelconque des revendications 1-6.

8. Dispositif de commande de maintien automatique de véhicule (AVH), dans lequel le dispositif comprend :
un module de détection (100), configuré pour détecter un signal de condition de stationnement et un signal clé de fonction AVH associé à une fonction AVH d'un véhicule généré par un conducteur faisant fonctionner le véhicule en temps réel ;
un module de commande initial (200), configuré pour, lorsque le signal clé de fonction AVH est détecté pour la première fois, si le signal de condition de stationnement correspondant détecté satisfait des conditions de travail de fonction de stationnement préréglées, commander la fonction AVH pour entrer dans un état actif ou un état de veille ; et
un module de commande de stationnement (300), **caractérisé en ce qu'**il est configuré pour, lorsque la fonction AVH est dans l'état actif ou l'état de veille, réaliser la commande d'AVH suivante :
si le signal de condition de stationnement détecté en temps réel ne satisfait plus les conditions de travail de fonction de stationnement préréglées, commander la fonction AVH pour entrer dans un état de sommeil ;
pour la fonction AVH dans l'état de sommeil, si le signal de condition de stationnement satisfait les conditions de travail de fonction de stationnement préréglées à nouveau, commander la fonction AVH pour entrer à nouveau dans l'état actif ou l'état de veille ; et
si le signal clé de fonction AVH est détecté à nouveau, commander la fonction AVH pour entrer dans un état d'arrêt ;
dans lequel, l'état actif s'applique à un état dans lequel la fonction AVH est démarrée et la commande de stationnement est exécutée, l'état de veille s'applique à un état dans lequel la fonction AVH est démarrée mais est toujours en attente d'une instruction de commande pour exécuter la commande de stationnement, l'état de sommeil s'applique à un état dans lequel la fonction AVH est démarrée mais doit être réveillée pour entrer dans l'état actif ou l'état de veille.

9. Dispositif de commande d'AVH selon la revendication 8, dans lequel le dispositif comprend en outre :
un module de commande lumineuse (400), configuré pour commander un tableau de bord pour donner une indication lumineuse lorsque la fonction AVH entre dans l'état actif ou l'état de veille.

10. Dispositif de commande d'AVH selon la revendication 8, dans lequel le dispositif comprend en outre :
un module de réglage (500), configuré pour juger si la fonction AVH peut entrer dans l'état actif, l'état de veille, l'état d'arrêt ou l'état de sommeil.

11. Dispositif de commande d'AVH selon la revendication 10, dans lequel le module de jugement (500) comprend
un premier sous-module de réglage (510), configuré pour juger si la fonction AVH peut entrer dans l'état d'arrêt, l'état de veille ou l'état de sommeil par modification du signal clé d'AVH et les conditions de travail de fonction de stationnement préréglées ;
un deuxième sous-module de réglage (520), configuré pour juger si la fonction AVH peut entrer dans l'état actif ou l'état de veille par l'intermédiaire d'un signal de course de pédale de frein, dans lequel la fonction AVH devrait pouvoir entrer dans l'état actif lorsque le signal de course de pédale de frein est détecté, sinon la fonction AVH devrait pouvoir entrer dans l'état de veille ;
un troisième sous-module de réglage (530), configuré pour juger si la fonction AVH peut entrer dans l'état actif ou l'état de veille par le fait de détecter si un signal de stationnement de freinage électronique existe après un laps de temps prédéterminé, dans lequel si le signal de stationnement de freinage électronique existe, la fonction AVH peut entrer dans l'état actif ou l'état de veille ; et/ou
un quatrième sous-module de réglage, configuré pour juger si la fonction AVH peut entrer dans l'état actif et l'état de veille par l'intermédiaire d'un signal de course de pédale de frein, un signal d'arrêt de véhicule et un signal de stationnement électronique, dans lequel si le signal de course de pédale de frein et le signal d'arrêt de véhicule sont détectés et le signal de stationnement électronique montre qu'un frein de stationnement électrique du véhicule ne fonctionne pas, la fonction AVH devrait pouvoir entrer dans l'état actif, sinon la fonction AVH devrait pouvoir entrer dans l'état de veille.
